# EUROPÄISCHE PATENTSCHRIFT

(11) **EP 3 943 330 B1**
(45) Veröffentlichungstag und Bekanntmachung des Hinweises auf die Patenterteilung: **12.03.2025**
(21) Anmeldenummer: 21186029.1
(22) Anmeldetag: 16.07.2021
(51) Int. Cl.: B60K 25/08

(54) **KÜHLFAHRZEUGANORDNUNG UND VORRICHTUNG ZUM BETRIEB EINES GENERATORS**
REFRIGERATED VEHICLE ASSEMBLY AND DEVICE FOR OPERATING A GENERATOR
SYSTÈME DE VÉHICULE FRIGORIFIQUE ET DISPOSITIF DE FONCTIONNEMENT D'UN GÉNÉRATEUR

(30) Priorität: 24.07.2020 DE 202020104269 U
(43) Veröffentlichungstag der Anmeldung: 26.01.2022
(73) Patentinhaber: Kiesling Fahrzeugbau GmbH, 89160 Dornstadt-Tomerdingen (DE)
(72) Erfinder: KIESLING, Peter, 89081 Ulm (DE)
(74) Vertreter: Baur & Weber Patentanwälte PartG mbB

(56) Entgegenhaltungen:
- EP-A1- 3 427 992
- EP-A2- 3 205 564
- GB-A- 2 156 291
- US-A- 2 584 242
- US-A- 5 680 907
- US-A- 5 921 334
- US-A1- 2012 152 634
- US-A1- 2016 129 753
- US-A1- 2016 347 173

## Beschreibung

Die Erfindung betrifft eine Kühlfahrzeuganordnung, insbesondere ein mit einem Kühlraum versehener Anhänger oder Sattelauflieger, sowie eine Vorrichtung zum Betrieb eines Generators.

Aus dem allgemeinen Stand der Technik ist es bekannt, dass Kühlfahrzeuge zur Kühlung des Laderaums mit Kühlmaschinen versehen werden. Kühlfahrzeuge, welche als Lastkraftwagen oder Kleintransporter ausgebildet sind, weisen oftmals eine Verbindung der Kühlmaschine zum Fahrzeugmotor auf, so dass diese im Fahrbetrieb keinen eigenständigen Antrieb benötigt. Im Standbetrieb kann hier zusätzlich eine Versorgung mit einem Dieselaggregat oder über eine Batterie erfolgen.

Die letztgenannte Möglichkeit wurde beispielsweise in der DE 10 2017 115 764 A1 detailliert beschrieben. In dieser Schrift ist unter anderem angegeben, dass ein Generator zur Erzeugung elektrischer Energie vorgesehen ist, der von einer Bewegung des Kühlfahrzeugs angetriebenen drehbaren Welle über ein Rad in Drehbewegung versetzt wird. Die abgegebene Energie am Ausgang des Generators kann direkt an das Kühlgerät an einem Pufferspeicher oder an eine Batterie zugeführt werden.

Ein eigenständiger Antrieb der Kühlmaschine ist insbesondere bei gezogenen Einheiten, wie Anhänger oder Sattelauflieger vorteilhaft. Die dazu vorgesehenen Dieselaggregate, welche für gewöhnlich die Kühlmaschine antreiben, unterliegen jedoch nicht den aktuellen Abgasnormen für Fahrzeuge innerhalb der europäischen Union, so dass diese ohne entsprechende Abgasnachbehandlung deutlich höhere Schadstoffmengen ausstoßen. Grund hierfür ist, dass die EU-Verordnung für Kleinmotoren Abgase und Geräusche noch nicht so stark reguliert, wie dies bereits bei Fahrzeugmotoren erfolgte. Aus diesem Grund ist der Lärmpegel dieser Dieselaggregate durch den fast oder nahezu ungedämmten Dieselmotor sehr hoch. Daher besteht bei den meisten Kühlgeräten mit Dieselaggregat zusätzlich die Möglichkeit, die Kältemaschine im Standbetrieb auch mit einem Elektromotor zu betreiben.

Das Verlegen einer elektrischen oder zusätzlichen Versorgungsleitung vom Zugfahrzeug zum Anhänger ist oftmals nicht möglich, da der Betreiber auch die Möglichkeit des Abkoppelns des Anhängers erhalten sowie gelegentlich eine Zugmaschine auswechseln möchte. Auch im sogenannten Begegnungsverkehr, bei dem zwei Fahrzeuge aus entgegengesetzter Richtung aufeinander zufahren und am Treffpunkt ihre Anhänger oder Sattelauflieger tauschen, um anschließend wieder an ihren Ausgangspunkt zurückzukehren, ist die Bereitstellung zusätzlicher Versorgungsleitungen zwischen Zugfahrzeug und Anhänger oder Auflieger in der Praxis kaum möglich.

Aus diesem Grund wurden in den vergangenen Jahren entsprechende Batterieanlagen entwickelt, welche den Elektromotor der Kältemaschine des Anhängers oder Aufliegers mit Energie versorgen und direkt am Anhänger oder Auflieger angebracht sind. Aufgrund der sehr unterschiedlichen Einsatzzeiten im Speditionsverkehr ist die Dimensionierung derartiger Batterieanlagen jedoch nicht einfach, da eine verlässliche Vorhersage kaum möglich ist. Insbesondere international fahrende Speditionen haben Schwierigkeiten, entsprechende Ladestationen zum Laden der Batterieanlage zu finden. Zudem gibt es europaweit an vielen LKW-Rastplätzen kaum ausreichende Ladestationen zum Aufladen der Batterieanlage. Das Aufladen der Batterieanlage selbst ist sehr langwierig und passt nicht immer in den Zeitplan des Spediteurs. Somit wird oftmals auf die naheliegende Lösung der zusätzlichen Erhöhung der Kapazität der Batterieanlage gewählt, was jedoch zusätzliche Kosten und zusätzliches Gewicht verursacht.

Aus der EP 2 266 831 A2 ist ein Energieerzeugungssystem bekannt, das eine im Vergleich zur Fahrzeugbreite kürzere Achse mit zwei Rädern, eine Welle, einen Generator und eine Aufhängung aufweist. Die Räder sind über die Welle mit dem Generator verbunden, der wiederum an der Aufhängung angeordnet ist. Die Aufhängung befindet sich auf der Unterseite eines Kühlfahrzeugaufbaus, so dass während der Fahrt das Rad des Energieerzeugungssystems angetrieben wird.

In der US 8,723,344 B1 wird ein Energieerzeugungssystem angegeben, bei dem über ein Hilfsrad Rotationsenergie von einem Hauptdraht abgegriffen wird. Zu diesem Zweck berührt das Hilfsrad das Hauptrad des Fahrzeugaufbaus. Vom Hilfsrad ausgehend wird die Rotationsenergie anschließend über einen Riemenantrieb zu einem Generator übertragen, in welchem elektrische Energie erzeugt wird.

In der WO 2006/045 124 A1 wird ein Kühlfahrzeuganhänger beschrieben, der zur Erzeugung von elektrischer Energie während der Fahrt oder zum Betreiben eines Kühlkompressors während der Fahrt einen mit der Fahrzeugachse des Anhängers verbundene Riemenanordnung umfasst. Die Riemenanordnung ist über ein Getriebe und Führungsräder sowie über Spanner zwischen einem Generator und der Fahrzeugachse aufgespannt.

In der US 2012/152,634 A1 wird ein fünftes Rad für ein Personenkraftfahrzeug vorgeschlagen, über welches während der Fahrt Rotationsenergie über einen Riemen an einen Generator zur Erzeugung elektrischer Energie übertragen wird.

Aus der WO 2010/133 863 A2 ist ein Energieerzeugungssystem zur Montage unterhalb eines Fahrzeugaufbaus bekannt, welches ein während der Fahrt angetriebenes Rad umfasst, dessen Rotationsenergie beispielsweise über einen Kettenantrieb an einen Generator zur Erzeugung elektrischer Energie übertragen wird.

Aus der US 8,439,140 B1 ist ein auf einer Fahrzeugachse eines Kraftfahrzeugs angebrachter Adapter bekannt, der über einen Riemen einen Generator antreibt, so dass während der Fahrt aus der Achse des Kraftfahrzeugs Rotationsenergie zum Generator übertragen wird.

Die US 2017/144,552 A1 beschreibt eine Einrichtung zur Energierückgewinnung für ein Elektrofahrzeug, welche eine Kette umfasst, die in einen Zahnkranz auf der Hinterachse eines Kraftfahrzeugs eingreift und Rotationsenergie zu einem Generator überträgt.

Die US 5 921 334 A zeigt einen Straßengenerator für ein Kraftfahrzeug mit einer Generatoreinheit zur Umwandlung mechanischer Energie in elektrische Energie. Eine Struktur dient zur Verbindung der Generatoreinheit mit einem hinteren Teil eines Fahrgestells des Kraftfahrzeugs. Eine Radanordnung ist mit der Verbindungsstruktur gekoppelt, so dass sich die Radanordnung auf einer Straße, auf der das Kraftfahrzeug fährt, drehen kann. Eine Einrichtung erstreckt sich zwischen der Generatoreinheit und der Radanordnung, um die Generatoreinheit durch die Drehung der Radanordnung auf der Straße zu betreiben. Die Generatoreinheit kann verschiedene elektrische Komponenten innerhalb des Kraftfahrzeugs mit Strom versorgen.

Die US 2016/347173 A1 zeigt ein radgetriebenes Generator-Ladesystem, das die Rotationsenergie eines Fahrzeugrades aufnimmt und diese auf einen Generator zur Stromerzeugung überträgt. Ein Wechselstromgenerator, eine Halterung und eine Übertragungswelle sind an einem Tragrahmen befestigt. Ein Antriebsrad wird mit einem vorhandenen Rad des Fahrzeugs verbunden. Das Antriebsrad ist über eine erste Riemenscheibenanordnung mit der Übertragungswelle verbunden. Eine zweite Riemenscheibenanordnung ist zwischen der Übertragungswelle und einem Lichtmaschinenrad angeschlossen. Wenn sich das Fahrzeugrad dreht, wird die mechanische Energie über die erste Riemenscheibenanordnung, die Übertragungswelle und die zweite Riemenscheibenanordnung auf die Lichtmaschine übertragen. Die Halterung ist am Fahrzeugrahmen befestigt.

Die GB 2 156 291 A zeigt ein elektrisch angetriebenes Fahrzeug mit einem Rad, das an einem einziehbaren Längslenker befestigt ist, der auf den Boden abgesenkt wird, wenn sich das Fahrzeug in Bewegung befindet. Das Rad ist so angeordnet, dass es ein Schwungrad antreibt, das eine Fliehkraftkupplung enthält, die mit Mitteln in Eingriff steht, um einen Generator zum Laden der Fahrzeugbatterien anzutreiben.

Für gezogene Einheiten, wie Anhänger oder Sattelauflieger, sind somit separate Vorrichtungen zur Energieeinspeisung während der Fahrt an sich bekannt, welche sich jedoch in der Praxis aus verschiedenen Gründen bisher nicht durchsetzen konnten.

Sofern jedoch die Fahrzeugachsen mit Generatoren verbunden werden, müssen jedoch diverse elektronische Assistenzsysteme, wie z. B. das gesetzlich vorgeschriebene Antiblockiersystem oder das elektronische Stabilitätsprogramm der gezogenen Einheiten neu eingestellt werden, so dass eine eventuelle Nachrüstung zeit- und kostenintensiv ist. Bei integrierten Achsgeneratoren ist darüber hinaus eine Anpassung an die zu versorgende Batterieanlage kaum möglich.

Desweiteren unterliegen derartige Vorrichtungen einem erhöhten Verschleiß, da diese teilweise als ungefederte Masse Teil der Achse sind und somit erhöhten Erschütterungen ausgesetzt sind. Zudem sind diese Vorrichtungen starken Umwelteinflüssen während des Fahrbetriebs ausgesetzt.

Ausgehend von diesem Stand der Technik hat sich der Erfinder nun die Aufgabe gestellt, eine Kühlfahrzeuganordnung zu schaffen, bei der für eine gezogene Einheit eine separate Batterieeinspeisung erfolgt, welche auf einfache Weise auch bereits bei bestehenden gezogenen Einheiten eingesetzt werden kann und die an die Anforderungen der jeweiligen Batterieanlage angepasst werden kann.

Diese Aufgabe wird durch die Merkmale der Ansprüche 1 und 6 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Kühlfahrzeuganordnung, insbesondere eine mit einem Kühlraum versehene gezogene Einheit wie ein Anhänger oder ein Sattelauflieger, angegeben, welche eine mit einem Laufrad versehene Halbachse aufweist, die über einen Schwenkhebel und einen an einer Unterseite eines Fahrzeugrahmens angeordnete Halterung mit dem Fahrzeugrahmen verbunden ist, wobei der Schwenkhebel an dem der Halterung zugewandten Ende um eine Schwenkachse schwenkbar und mit einer um die Schwenkachse drehbaren Riemenscheibe versehen ist, welche über einen ersten Riemen vom Laufrad angetrieben ist und welche über einen zweiten Riemen einen Generator antreibt, der am Fahrzeugrahmen befestigt ist und zur Abgabe elektrischer Energie an eine Batterie zur Versorgung eines Kühlaggregat vorgesehen ist, wobei das Laufrad in Bezug zu einer Längsachse des Fahrzeugrahmen in einem mittigen Bereich und an oder benachbart zu einer schlupffreien Position der gezogenen Einheit angeordnet ist.

Demnach wird für gezogene Einheiten, wie Anhänger und Sattelauflieger, eine separate Energieeinspeisung der Batterie während der Fahrt geschaffen, wobei erfindungsgemäß der Generator am Fahrzeugrahmen des Anhängers oder Sattelauflieger angeordnet ist, sodass dieser nicht mehr Teil der Achse der gezogenen Einheit ist und somit nicht mehr als ungefederte Masse wirkt. Des Weiteren ermöglicht die erfindungsgemäße Lösung eine leichte Anpassbarkeit an die jeweilig zu versorgende Batterieanlage, da lediglich die Leistungsabgabe des Generators entsprechend gewählt werden muss. Das Laufrad arbeitet dabei unabhängig von den übrigen Laufachsen der gezogenen Einheit eigenständig und unterliegt aufgrund seiner vorteilhaften Positionierung an oder benachbart zur schlupffreien Position nur geringem Verschleiß. Bei einem Anhänger mit Tandemachse wäre die schlupffreie Position zwischen den beiden Achsen. Bei einem Sattelauflieger mit drei Achsen befindet sich die schlupffreie Position nahe bei der mittleren Achse. Des Weiteren ist das Laufrad in etwa in der Fahrzeugmitte angebracht, sodass eventuelle Rückstellmomente durch das Anfahren des Generators gleichmäßig bezüglich der linken und der rechten Räder der Fahrzeugachsen verteilt werden. Insbesondere die zuletzt genannte Eigenschaft der erfindungsgemäßen Lösung erweist sich als besonders vorteilhaft, da der Generator nun so betrieben werden kann, dass dieser unabhängig von der Fahrsituation und der Beladung sowie der Straßenverhältnisse zu- oder abgeschaltet werden kann, ohne dass hierbei über die Rückstellmomente Sensorsignale an den Assistenzsystemen generiert werden, welche beispielsweise im Antiblockiersystem oder dem elektronischen Stabilitätsprogramm sich auf den Fahrbetrieb negativ auswirkende Reaktionen auslösen könnten. Der Generator kann daher beispielsweise erst ab einer bestimmten Drehzahl während der Fahrt eingesetzt werden oder auf eine Anforderung von der Bordelektronik hin zugeschaltet werden.

Gemäß Ausführungsformen der Erfindung kann der Generator das Kühlaggregat direkt betreiben oder mit einer Batterie verbunden sein, über welche das Kühlaggregat mit elektrischer Energie versorgt wird.

Die Erfindung ist sowohl bei einem Direktbetrieb des Kühlaggregats als auch bei einer Pufferung der elektrischen Energie mittels einer Batterie einsetzbar.

Gemäß einer weiteren Ausführungsform der Erfindung ist der Generator so gesteuert, dass die Abgabe elektrischer Energie bei einem Schubbetrieb der Kühlfahrzeuganordnung erfolgt.

Auf diese Weise kann sichergestellt werden, dass die Batterie mit elektrischer Energie geladen wird, welche ansonsten als überschüssige Bremsenergie nutzlos wäre. Die Information, dass der Sattelauflieger oder der Anhänger in einem Rekuperationsbetrieb beispielsweise hangabwärts betrieben wird, kann auf unterschiedliche Weise festgestellt werden. Neben einem einfachen Neigungssensor, der gegebenenfalls mit einer Geschwindigkeitsanzeige gekoppelt wird, kommt auch die Nutzung der Information aus einem Navigationsgerät infrage, welches die aktuelle Position des Fahrzeugs mit dem Profil der Fahrstrecke verknüpfen kann.

Gemäß einer weiteren Ausführungsform der Erfindung ist der Generator relativ zur Riemenscheibe zur Längenanpassung an den zweiten Riemen verlagerbar.

Da der Drehpunkt der Riemenscheibe zur Drehachse des Schwenkhebels identisch gewählt ist, tritt keine zusätzliche einseitige Spannung auf den ersten Riemen beim Schwenken des Schwenkhebels auf, sodass der erste Riemen während des Fahrbetriebs stramm sitzt. Um eine Anwendung der Erfindung bei unterschiedlichen Aufbauten zu ermöglichen, hatte sich jedoch bewährt, eventuelle konstruktionsbedingte Unterschiede in der Positionierung des Generators durch einen Verstellmechanismus an die Lände des zweiten Riemens ausgleichen zu können. Auf diese Weise wird auch der Austausch des Generators, beispielsweise bei einem Wechsel auf ein leistungsstärkeres Modell, erleichtert.

Sowohl der erste Riemen als auch der zweite Riemen können mit einem Riemenspanner ausgestattet sein, um die Riemen im Arbeitsbereich zu halten.

Gemäß einer weiteren Ausführungsform der Erfindung ist das Laufrad aus oder in eine Ruheposition ohne einen Fahrbahnkontakt überführbar.

Auf diese Weise kann der Reifenverschleiß am Laufrad verringert werden, wobei ein Überführen aus oder in die Ruheposition auch während eines Fahrbetriebs möglich sein soll, wie bereits oben in Zusammenhang mit der Aktivierung des Generators erläutert wurde, so dass das Laufrad erst ab einer bestimmten Fahrgeschwindigkeit oder in einer bestimmten Fahrsituation mit der Fahrbahn in Kontakt tritt.

Gemäß einer weiteren Ausführungsform der Erfindung erfolgt das Überführen des Laufrads aus oder in die Ruheposition mittels einer Steuereinrichtung, so dass der Generator in Abhängigkeit eines Strombedarfs des Kühlaggregats oder eines Ladebedarfs der Batterie elektrische Energie abgibt.

Solange die Batterie des Fahrzeugs keinen Ladebedarfs aufweist oder das Kühlaggregat keinen Strombedarf hat, kann somit das Laufrad in seiner Ruheposition verbleiben, sodass kein zusätzlicher Verschleiß am Reifen des Laufrads auftritt.

Gemäß einer weiteren Ausführungsform der Erfindung führt ein Arbeitszylinder eine Drehung des Schwenkhebels um die Schwenkachse durch oder bewegt eine Liftvorrichtung die Halterung relativ zum Fahrzeugrahmen.

Das Überführen des Schwenkhebels kann auf unterschiedliche Weise realisiert werden, wobei der Arbeitszylinder pneumatisch oder hydraulisch sowie mittels eines Elektromotors realisiert sein kann. Ebenso ist es denkbar, anstelle einer Bewegung um die Schwenkachse die Halterung relativ zum Fahrzeugrahmen vertikal mittels einer Liftvorrichtung zu versetzen.

Gemäß einer weiteren Ausführungsform der Erfindung weist die Riemenscheibe an den Laufflächen des ersten Riemens und des zweiten Riemens unterschiedliche Außendurchmesser auf.

Die Riemenscheibe kann über die Wahl der Außendurchmesser für die Riemen ein gewünschtes Übersetzungsverhältnis bereitstellen, sodass der Einsatz eines Getriebes nicht notwendig ist.

Gemäß einer weiteren Ausführungsform der Erfindung weist das Laufrad im Vergleich zu den Rädern der gezogenen Einheit einen geringeren Durchmesser auf.

Im Vergleich zu den üblicherweise bei Anhängern oder Sattelauflieger verwendeten Rädern kann das Laufrad mit geringerem Durchmesser ausgestattet werden, wobei das Laufrad jedoch einen bestimmten Mindestdurchmesser nicht unterschreiten sollte, um zu verhindern, dass Fahrbahnhindernisse das Laufrad beschädigen können.

Gemäß einer weiteren Ausführungsform der Erfindung ist die Kühlfahrzeuganordnung im Rahmen einer Nachrüstung an den Fahrzeugrahmen, insbesondere über nachträglich angebrachte Querträger, angebracht.

Ein weiterer Vorteil besteht darin, dass die erfindungsgemäße Lösung als Nachrüstung schnell montierbar und demontierbar ist.

Gemäß einer weiteren Ausführungsform der Erfindung ist der Schwenkhebel in Form einer Schwinge mit einem Federelement versehen oder bei der im Bereich der Schwenkachse eine Torsionsfeder angeordnet.

Um Fahrbahnunebenheiten ausgleichen zu können, kann der Schwenkhebel auf unterschiedliche Weise gefedert werden. Wichtig ist auch, dass das Laufrad am Schwenkhebel über ein möglichst kurzes Achsrohr befestigt ist, um den Abstand zum Schwenkhebel möglichst gering zu halten, sodass Reifenverschleiß bei Kurvenfahrten aufgrund einer Horizontalbiegung des Rahmens minimiert wird.

Des Weiteren wird eine Vorrichtung zum Betrieb eines Generators angeben, welche eine Energieversorgung bei einer gezogenen Einheit, wie ein Anhänger oder einem Sattelauflieger, bereitstellt, wobei die Vorrichtung eine mit einem Laufrad versehene Halbachse aufweist, die über einen Schwenkhebel und einen an einer Unterseite eines Fahrzeugrahmens angeordnete Halterung mit dem Fahrzeugrahmen verbunden ist, wobei der Schwenkhebel an dem der Halterung zugewandten Ende um eine Schwenkachse schwenkbar und mit einer um die Schwenkachse drehbaren Riemenscheibe versehen ist, welche über einen ersten Riemen vom Laufrad angetrieben ist und welche über einen zweiten Riemen einen Generator antreibt, der am Fahrzeugrahmen befestigt ist und zur Abgabe elektrischer Energie vorgesehen ist, wobei das Laufrad in Bezug zu einer Längsachse des Fahrzeugrahmens in einem mittigen Bereich und an oder benachbart zu einer schlupffreien Position der gezogenen Einheit angeordnet ist.

Bei der Vorrichtung zum Betrieb eines Generators kann, falls notwendig, der Generator mit Batterieanlage verbunden sein, wie oben bereits im Zusammenhang mit der Versorgung einer Kühlanlage an einem Anhänger oder Sattelanhänger beschrieben wurde. Die Vorrichtung kann aber auch andere Aggregate an einem Anhänger oder Sattelanhänger mit Energie versorgen. Weitere Anwendung wären zum Beispiel bei einem Tankauflieger die Versorgung von Pumpen oder Rührwerken, bei einem Betonmischer ein über einen Elektromotor elektrischer oder hydraulischer Antrieb einer rotierenden und neigbaren Mischtrommel. In der folgenden detaillierten Beschreibung wird lediglich die Anwendung anhand eines zu kühlenden Raums beschrieben, ohne dabei jedoch die Erfindung auf diesen Fall zu beschränken.

Nachfolgend werden einige Ausführungsbeispiele anhand der Zeichnung näher erläutert. Es zeigen:
- Figur 1: eine Seitenansicht einer erfindungsgemäßen Kühlfahrzeuganordnung,
- Figur 2: ein Teil der Kühlfahrzeuganordnung aus Figur 1 in einer perspektivischen Seitenansicht,
- Figur 3A-C: einen Teil der Kühlfahrzeuganordnung aus Figur 1 in einer Ansicht von der Unterseite,
- Figur 4: ein Teil der Kühlfahrzeuganordnung aus Figur 1 in einer Draufsicht, und
- Figur 5: ein Teil der Kühlfahrzeuganordnung aus Figur 1 in einer Seitenansicht entlang der in Figur 4 eingezeichneten Ebene A - A'.

In den Figuren sind gleiche oder funktional gleich wirkende Bauelemente mit den gleichen Bezugszeichen versehen.

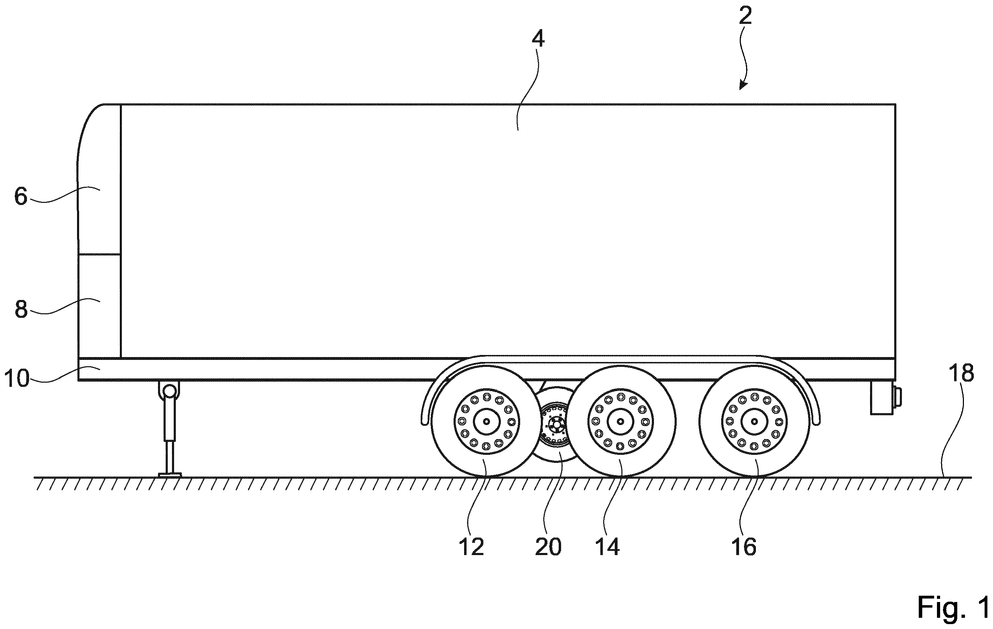

In Figur 1 ist eine Ausführungsform einer erfindungsgemäßen Kühlfahrzeuganordnung 2 gezeigt, bei der eine gezogene Einheit in Form eines Sattel Aufliegers zum Einsatz kommt. Anstelle eines Sattel Aufliegers könnte aber auch ein Anhänger verwendet werden. Die Kühlfahrzeuganordnung 2 weist einen Kühlraum 4 auf, an dessen Vorderseite sich ein Kühlaggregat 6 befindet. Das Kühlaggregat 6 kann über eine Batterie 8 mit elektrischer Energie versorgt werden, um das Innere des Kühlraum 4 zu kühlen. Die Batterie 8 kann aber auch an einer anderen Position, beispielsweise unterhalb von einem Fahrzeugrahmen 10, welcher lediglich vereinfacht als zwei parallele Längsträger dargestellt ist, welche den Kühlraum 4 tragen, angeordnet sein. Schematisch sind unterhalb des Fahrzeugrahmens 10 eine vordere Achse 12, eine mittlere Achse 14 und eine hintere Achse 16 gezeigt, mittels derer die Kühlfahrzeuganordnung 2 über eine Fahrbahn 18 von einer nicht dargestellten Zugmaschine gezogen werden kann. Weitere Komponenten, die jedoch für die eigentliche Erfindung nicht von Bedeutung sind, wurden aus Gründen der Übersichtlichkeit weggelassen. Dies betrifft beispielsweise die Ankopplung an die Zugmaschine oder das Fahrwerk für die vordere Achse 12, die mittlere Achse 14 und die hintere Achse 16. Derartige Komponenten sind jedoch einem Fachmann bekannt. Des Weiteren ist in Figur 1 ein Laufrad 20 zu erkennen, welches im Betrieb der Kühlfahrzeuganordnung bis auf die Fahrbahn 18 abgesenkt werden kann und über einen Generator ein Aufladen der Batterie 8 bewirken kann.

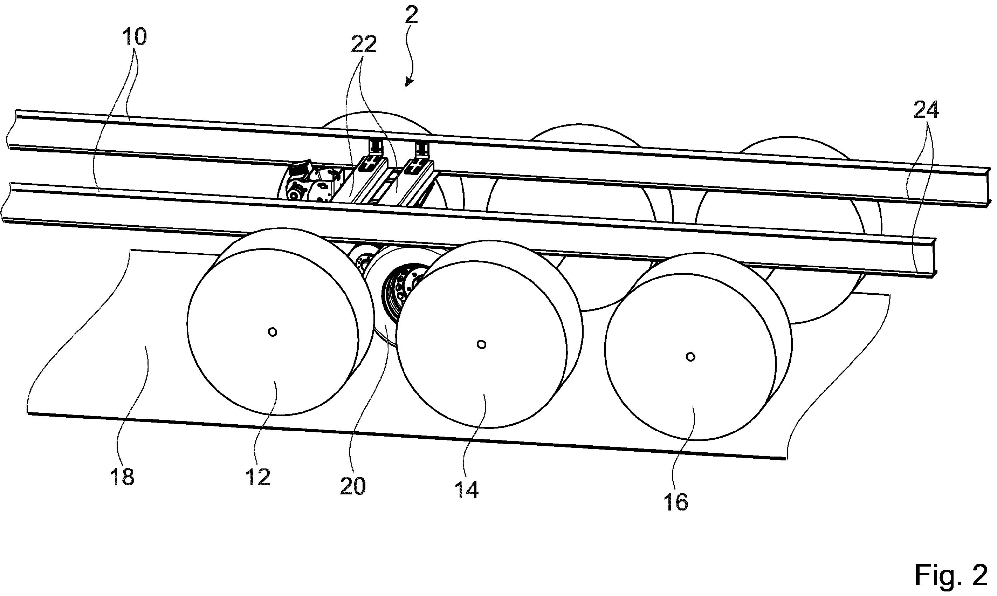

Um die weiteren Bestandteile der erfindungsgemäßen Kühlfahrzeuganordnung 2 besser darstellen zu können wird in Figur 2 eine perspektivische Ansicht gezeigt, bei der der Kühlraum 4 sowie das Kühlaggregat 6 und die Batterie 8 entfernt wurden. Man erkennt, dass zwischen den Längsträgern des Fahrzeugrahmens 10 mehrere Querträger 22 am Fahrzeugrahmen 10 angebracht sind, welche beispielsweise an Untergurten 24 der Längsträger des Fahrzeugrahmens 10 aufliegen und über entsprechende Verbindungsmittel mit den Längsträgern des Fahrzeugrahmens 10 verbunden sind. In anderen Ausführungsformen kann das Kühlaggregat 6 auch ohne Batterie 8 betrieben werden.

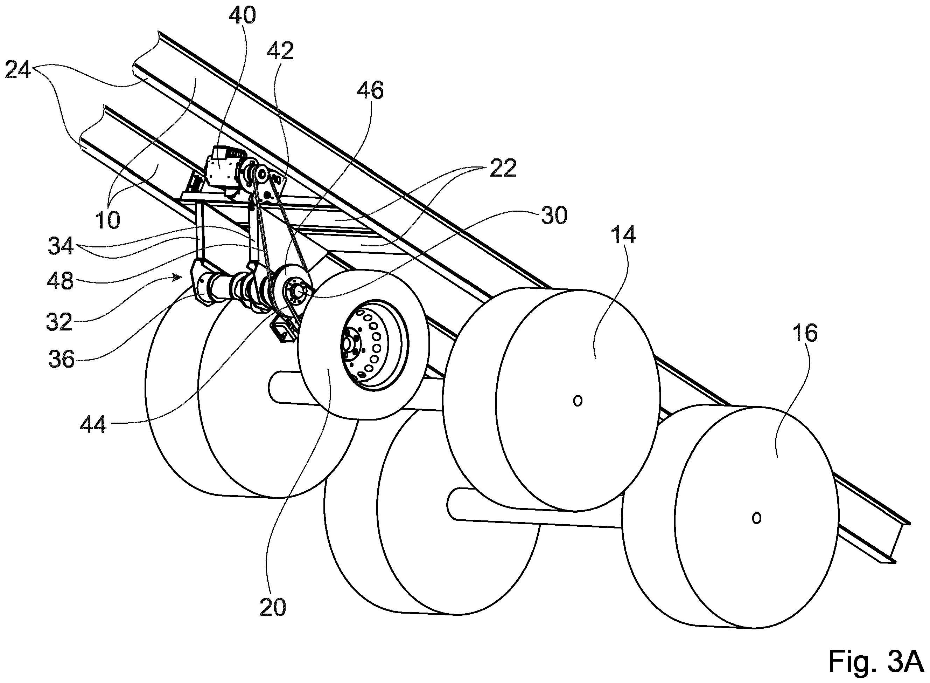

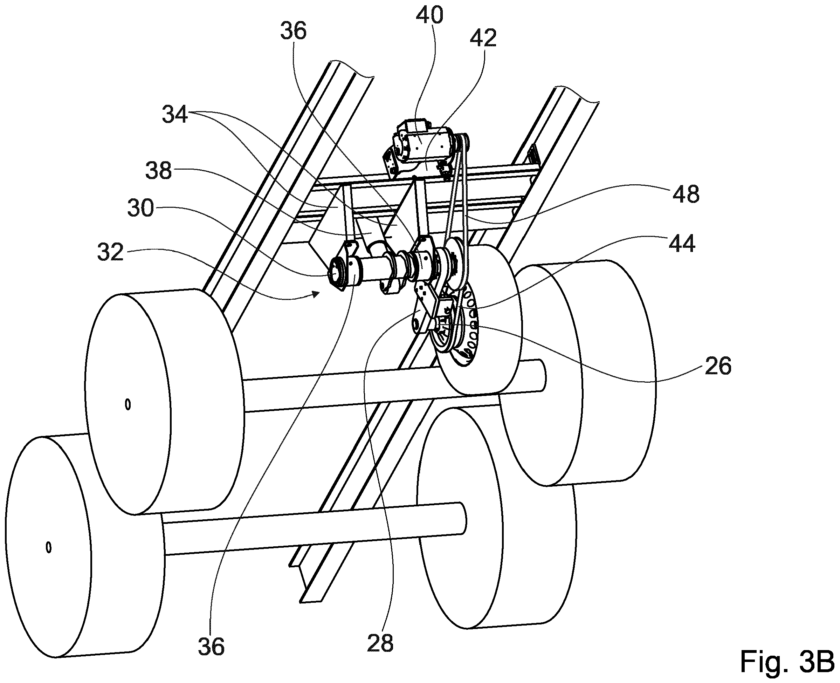

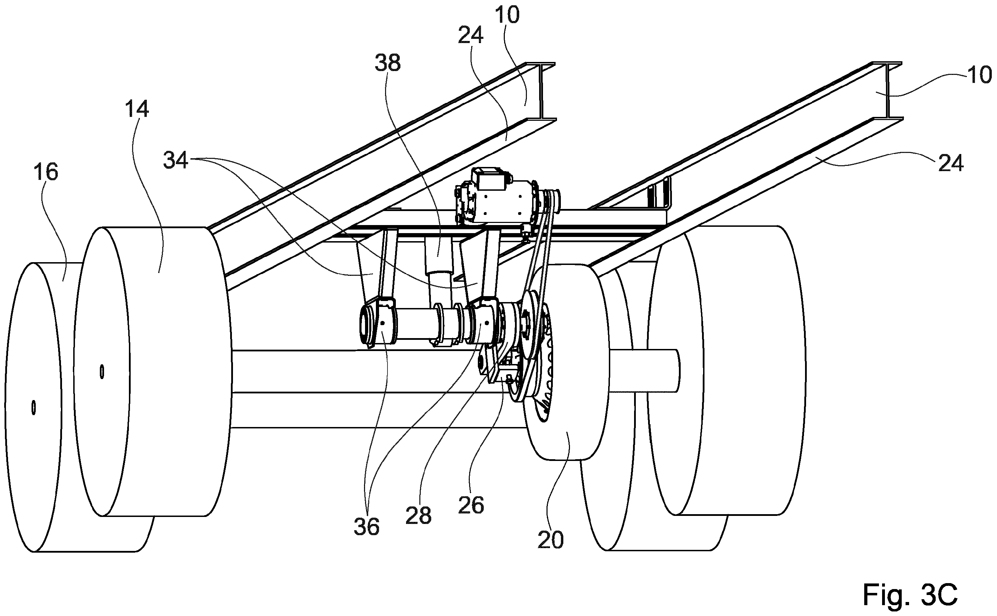

Unter Bezugnahme auf die Figuren 3A bis 3C die Erfindung nochmals aus einer Perspektive von der Unterseite der Kühlfahrzeuganordnung 2 gezeigt, wobei die vordere Achse 12 entfernt wurde. Man erkennt, dass das Laufrad 20 über eine Halbachse 26, welche als kurzer Achsstummel ausgeführt ist, in einen Schwenkhebel 28 mündet welcher um eine Schwenkachse 30 schwenkbar ist. Die Schwenkachse 30 ist drehbar in einer Halterung 32 befestigt, welche von den Querträgern 22 gehalten wird. Die Halterung 32 kann aus zwei parallel zueinander in Längsrichtung angeordneten Platten 34 gebildet werden, welche auf ihrer Unterseite 2 Aufnahmen 36 aufweist, welche die Schwenkachse 30 aufnehmen. Die Schwenkachse 30 ist darüber hinaus mit einem Arbeitszylinder 38 verbunden, der über eine Längenveränderung eine Drehbewegung der Schwenkachse 30 ermöglicht, sodass das Laufrad 20 aus einer Ruheposition in Richtung der Fahrbahn 18 oder zurück in die Ruheposition überführt werden kann der Arbeitszylinder 38 kann beispielsweise pneumatische oder hydraulisch betätigt werden, die Verwendung eines Elektromotors ist ebenfalls denkbar.

Des Weiteren ist in den Figuren 3A bis 3C einen Generator 40 zu erkennen, der über eine Abstützung 42 mit den Querträgern 22 oder auch in anderen Teilen des Fahrzeugrahmens 10 verbunden werden kann. Auf der Innenseite des Laufrads 20 befindet sich eine Lauffläche für einen ersten Riemen 44, der zu einer Riemenscheibe 46 geführt ist, welche direkt auf der Schwenkachse 30 drehbar angeordnet ist. Über einen zweiten Riemen 48 versetzt die Riemenscheibe 46 den Generator 40 in eine Drehbewegung. Durch die unterschiedlichen Durchmesser an den Laufflächen des ersten Riemens 44 und des zweiten Riemens 48 an der Riemenscheibe 46 lässt sich eine Übersetzung von der Drehung des Laufrads 20 zur Drehung der Generatornabe 50 erreichen.

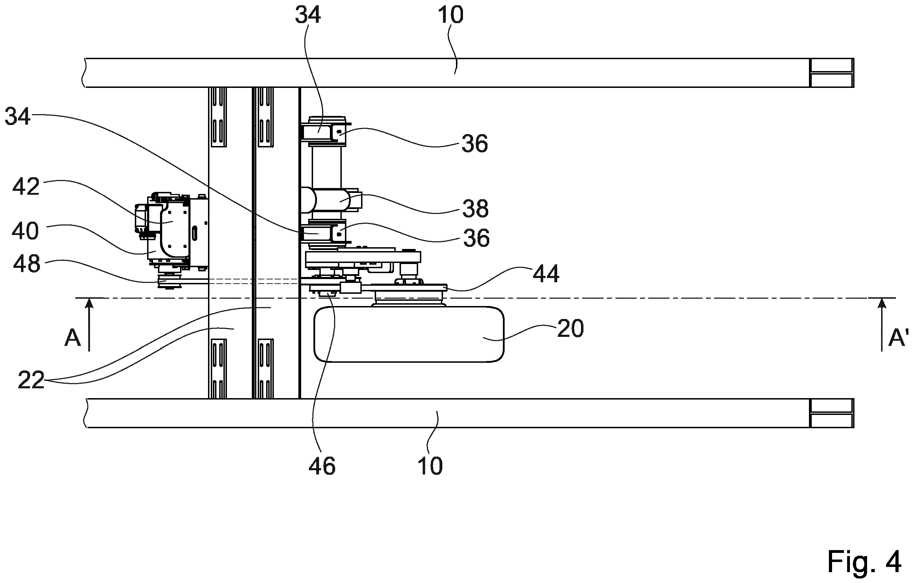

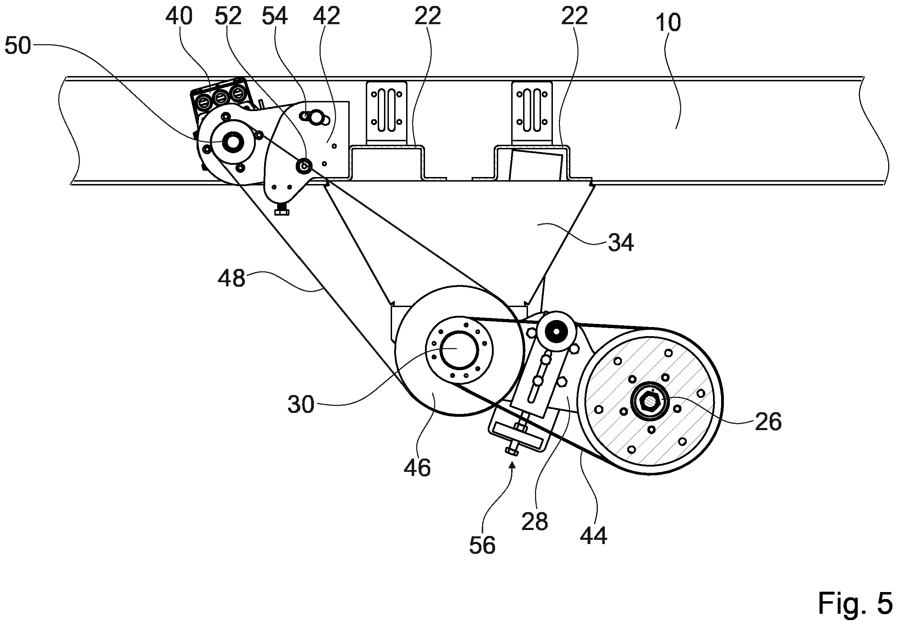

Um die Anordnung der einzelnen Elemente im Bereich der Riemenscheibe 46 deutlicher darstellen zu können wird unter Bezugnahme auf die Figuren 4 und 5 nun auch die mittlere Achse 14 und die hintere Achse 16 entfernt dargestellt. Dabei zeigt die Figur 5 eine Seitenansicht in der Ebene A-A', welche in Figur 4 anhand der gestrichelten Linie dargestellt ist. Man erkennt, dass der Generator 40 über die Abstützung 42 über ein Drehgelenk 52 und eine Sicherung in einem Langloch 54 bezüglich des Abstandes zur Schwenkachse 30 verlagert werden kann, sodass beispielsweise bei einer Nachrüstung der Kühlfahrzeuganordnung 2 ein Längenausgleich geschaffen werden kann. Ebenso erlaubt diese Vorgehensweise einen Austausch des Generators 40 beispielsweise mit einem leistungsstärkeren Modell, welches nicht zwingend die gleichen Außenabmessungen aufweisen muss. Der Abstand zwischen der Schwenkachse 30 und der Halbachse 26 bleibt jedoch bei einmal festgelegter Länge des Schwenkhebel des 28 unverändert. Um den ersten Riemen 44 und den zweiten Riemen 48 in ihren optimalen Arbeitsbereichen zu halten, kann ein Riemenspanner 56 vorgesehen sein, welche jedoch in der Darstellung gemäß Figur 5 lediglich für den ersten Riemen 44 eingezeichnet ist.

Durch das Zuschalten des Generators 40 bzw. das Absenken des Laufrads 20 mittels des Arbeitszylinder 38 lässt sich somit die Erzeugung elektrischer Energie je nach Bedarf der Batterie 8 steuern. Besonders vorteilhaft ist es, den Generator 40 nur dann zu benutzen, wenn sich die Kühlfahrzeug in einem Schubbetrieb beispielsweise in einer Bergabfahrt befindet, sodass die ansonsten verlorene Energie des Bremsvorgangs rekuperiert werden kann. Der Generator 40 kann das Kühlaggregat 6 auch ohne Batterie 8 direkt mit elektrischer Energie versorgen.

Durch die Positionierung des Laufrads 20 nahe einer schlupffreien Position an der Kühlfahrzeuganordnung 2 nahe der mittleren Achse 14 werden keine Kräfte auf einzelne Räder der Kühlfahrzeuganordnung 2 während des zuschalten des Generators 40 eingeleitet, sodass eine Neukalibrierung der Assistenzsysteme nicht notwendig ist oder deutlich vereinfacht sein kann. Die abgegebene elektrische Leistung des Generators 40 kann auch nachträglich durch Austausch des Generators 40 verändert werden, wobei typischerweise eine Leistungsabgabe bis zu ca. 30 kW erfolgen kann.

Somit ist es möglich, bereits bestehende Kühlfahrzeuge, welche als gezogene Einheiten in Form eines Anhängers oder eines Sattelaufliegers vorliegen können, mittels eines elektrischen Kühlaggregats 6 nachzurüsten, welches über die Batterie 8 mit elektrischer Energie versorgt wird, die wiederum über den Generator 40 aufgeladen werden kann, wenn das Laufrad 20 mit der Fahrbahn 18 in Drehbewegung versetzt wird. Da der Generator 40 mit dem Fahrzeugrahmen 10 verbunden ist, tritt auch keine Erhöhung ungefederter Massen an der vorderen Achse 12, der mittleren Achse 14 oder der hinteren Achse 16 ein, wie dies bei bekannten Generatorachsen erfolgt.

### Liste der Bezugszeichen:

- 2: Kühlfahrzeuganordnung
- 4: Kühlraum
- 6: Kühlaggregat
- 8: Batterie
- 10: Fahrzeugrahmen
- 12: vordere Achse
- 14: mittlere Achse
- 16: hintere Achse
- 18: Fahrbahn
- 20: Laufrad
- 22: Querträger
- 24: Untergurten
- 26: Halbachse
- 28: Schwenkhebel
- 30: Schwenkachse
- 32: Halterung
- 34: Platten
- 36: Aufnahmen
- 38: Arbeitszylinder
- 40: Generator
- 42: Abstützung
- 44: erster Riemen
- 46: Riemenscheibe
- 48: zweiter Riemen
- 50: Generatornabe
- 52: Drehgelenk
- 54: Langloch
- 56: Riemenspanner

## Patentansprüche

1. Vorrichtung zum Betrieb eines Generators, welche eine Energieversorgung bei einer gezogenen Einheit, wie ein Anhänger oder einem Sattelauflieger, bereitstellt, welche eine mit einem Laufrad (20) versehene Halbachse (26) aufweist, die über einen Schwenkhebel (28) und einen an einer Unterseite eines Fahrzeugrahmens (10) angeordnete Halterung (32) mit dem Fahrzeugrahmen (10) verbunden ist, wobei der Schwenkhebel (28) an dem der Halterung (32) zugewandten Ende um eine Schwenkachse (30) schwenkbar und mit einer um die Schwenkachse (30) drehbaren Riemenscheibe (46) versehen ist, welche über einen ersten Riemen (44) vom Laufrad (20) angetrieben ist, wobei das Laufrad (20) in Bezug zu einer Längsachse des Fahrzeugrahmens (10) in einem mittigen Bereich und an oder nahe einer schlupffreien Position der gezogenen Einheit angeordnet ist,
**dadurch gekennzeichnet, dass**
die Riemenscheibe (46) über einen zweiten Riemen (48) einen Generator (40) antreibt, der am Fahrzeugrahmen (10) befestigt ist und zur Abgabe elektrischer Energie zur Versorgung vorgesehen ist.

2. Vorrichtung nach Anspruch 1, bei der der Generator mit einer Batterieanlage verbunden ist.

3. Vorrichtung nach Anspruch 1, bei der der Generator direkt mit einem elektrischen Verbraucher verbunden ist.

4. Vorrichtung nach einem der Ansprüche 1 bis 3, bei der bei einem Tankauflieger die Versorgung von Pumpen oder Rührwerken erfolgt.

5. Vorrichtung nach einem der Ansprüche 1 bis 4, bei der bei einem Betonmischer ein über einen Elektromotor elektrischer oder hydraulischer Antrieb einer rotierenden und neigbaren Mischtrommel erfolgt.

6. Kühlfahrzeuganordnung, insbesondere eine mit einem Kühlraum versehene gezogene Einheit wie ein Anhänger oder ein Sattelauflieger, mit der Vorrichtung zum Betrieb eines Generators nach Anspruch 1, wobei der Generator (40) zur Abgabe elektrischer Energie zur Versorgung eines Kühlaggregat (6) vorgesehen ist.

7. Kühlfahrzeuganordnung nach Anspruch 6, bei der der Generator (40) das Kühlaggregat (6) direkt betreibt.

8. Kühlfahrzeuganordnung nach Anspruch 6, bei der der Generator (40) mit einer Batterie (8) verbunden ist, über welche das Kühlaggregat (6) mit elektrischer Energie versorgt wird.

9. Kühlfahrzeuganordnung nach einem der Ansprüche 6 bis 8, bei der der Generator (40) so gesteuert ist, dass die Abgabe elektrischer Energie bei einem Schubbetrieb der Kühlfahrzeuganordnung (2) erfolgt.

10. Kühlfahrzeuganordnung nach einem der Ansprüche 6 bis 8, bei der der Generator (40) relativ zur Riemenscheibe (46) zur Längenanpassung des zweiten Riemens (48) verlagerbar ist.

11. Kühlfahrzeuganordnung nach einem der Ansprüche 6 bis 10, bei der das Laufrad (20) aus oder in eine Ruheposition ohne einen Fahrbahnkontakt überführbar ist.

12. Kühlfahrzeuganordnung nach Anspruch 11, bei der das Überführen des Laufrads (20) aus oder in die Ruheposition mittels einer Steuereinrichtung erfolgt, so dass der Generator (40) in Abhängigkeit eines Strombedarfs des Kühlaggregats (6) oder eines Ladebedarfs der Batterie (8) elektrische Energie abgibt.

13. Kühlfahrzeuganordnung nach Anspruch 11 oder 12, bei der ein Arbeitszylinder (38) eine Drehung des Schwenkhebels (28) um die Schwenkachse (30) durchführt oder eine Liftvorrichtung die Halterung (32) relativ zum Fahrzeugrahmen (10) bewegt.

14. Kühlfahrzeuganordnung nach einem der Ansprüche 6 bis 13, bei der die Riemenscheibe (46) an den Laufflächen des ersten Riemens (44) und des zweiten Riemens (48) unterschiedliche Außendurchmesser aufweist.

15. Kühlfahrzeuganordnung nach einem der Ansprüche 6 bis 14, bei der das Laufrad (20) im Vergleich zu den Rädern der gezogenen Einheit einen geringeren Durchmesser aufweist.

16. Kühlfahrzeuganordnung nach einem der Ansprüche 6 bis 15, welche im Rahmen einer Nachrüstung an den Fahrzeugrahmen (10), insbesondere über Querträger (22), angebracht ist.

17. Kühlfahrzeuganordnung nach einem der Ansprüche 6 bis 16, bei der der Schwenkhebel (28) in Form einer Schwinge mit einem Federelement versehen ist oder bei der im Bereich der Schwenkachse (30) eine Torsionsfeder angeordnet ist.

## Claims

1. Device for operating a generator, which provides a power supply to a towed unit, such as a trailer or a semi-trailer, which has a half-axle (26) which is provided with a running wheel (20) and is connected to the vehicle frame (10) via a pivot lever (28) and a bracket (32) arranged on the bottom of a vehicle frame (10), the pivot lever (28) being pivotable around a pivot axle (30) at the end facing the bracket (32) and being provided with a pulley (46) which is rotatable around the pivot axle (30) and is driven by the running wheel (20) via a first belt (44), the running wheel (20) being arranged in a central region in relation to a longitudinal axis of the vehicle frame (10) and at or near a slip-free position of the towed unit,
**characterized in that**
the pulley (46) drives a generator (40) via a second belt (48), which generator is fastened to the vehicle frame (10) and is intended to deliver electrical energy for supply.

2. Device according to claim 1, wherein the generator is connected to a battery system.

3. Device according to claim 1, wherein the generator is directly connected to an electrical consumer.

4. Device according to any of claims 1 to 3, wherein pumps or agitators are supplied in a tank trailer.

5. Device according to any of claims 1 to 4, wherein in a concrete mixer a rotating and tiltable mixing drum is electrically or hydraulically driven via an electric motor.

6. Refrigerated vehicle assembly, in particular a towed unit provided with a refrigeration compartment, such as a trailer or a semi-trailer, comprising the device for operating a generator according to claim 1, wherein the generator (40) is provided for delivering electrical energy for supplying a refrigeration unit (6).

7. Refrigerated vehicle assembly according to claim 6, wherein the generator (40) directly operates the refrigeration unit (6).

8. Refrigerated vehicle assembly according to claim 6, wherein the generator (40) is connected to a battery (8) via which the refrigeration unit (6) is supplied with electrical energy.

9. Refrigerated vehicle assembly according to any of claims 6 to 8, wherein the generator (40) is controlled such that the electrical energy is delivered during an overrun mode of the refrigerated vehicle assembly (2).

10. Refrigerated vehicle assembly according to any of claims 6 to 8, wherein the generator (40) can be shifted relative to the pulley (46) for the length of the second belt (48) to be adjusted.

11. Refrigerated vehicle assembly according to any of claims 6 to 10, wherein the running wheel (20) can be transferred out of or into a rest position without making contact with the roadway.

12. Refrigerated vehicle assembly according to claim 11, wherein the running wheel (20) is transferred out of or into the rest position by means of a control device, and therefore the generator (40) delivers electrical energy depending on a power requirement of the refrigeration unit (6) or a charging requirement of the battery (8).

13. Refrigerated vehicle assembly according to either claim 11 or claim 12, wherein a working cylinder (38) rotates the pivot lever (28) around a pivot axle (30) or a lifting device moves the bracket (32) relative to the vehicle frame (10).

14. Refrigerated vehicle assembly according to any of claims 6 to 13, wherein the pulley (46) has different outer diameters on the running surfaces of the first belt (44) and the second belt (48).

15. Refrigerated vehicle assembly according to any of claims 6 to 14, wherein the running wheel (20) has a smaller diameter compared to the wheels of the towed unit.

16. Refrigerated vehicle assembly according to any of claims 6 to 15, which is attached to the vehicle frame (10), in particular via cross members (22), as part of a retrofit.

17. Refrigerated vehicle assembly according to any of claims 6 to 16, wherein the pivot lever (28) in the form of a rocker is provided with a spring element or wherein a torsion spring is arranged in the region of the pivot axle (30).

## Revendications

1. Dispositif permettant de faire fonctionner un générateur, lequel dispositif fournit une alimentation en énergie à une unité tractée, telle qu'une remorque ou une semi-remorque, et présente un demi-essieu (26) pourvu d'une roue porteuse (20) qui est relié à châssis de véhicule (10) par l'intermédiaire d'un levier pivotant (28) et d'un support (32) disposé sur une face inférieure du châssis de véhicule (10), dans lequel le levier pivotant (28) peut pivoter autour d'un axe de pivotement (30) à l'extrémité tournée vers le support (32) et est pourvu d'une poulie à courroie (46) pouvant tourner autour de l'axe de pivotement (30) et entraînée par la roue porteuse (20) par l'intermédiaire d'une première courroie (44), dans lequel la roue porteuse (20) est disposée dans une zone centrale par rapport à un axe longitudinal du châssis de véhicule (10) et au niveau ou à proximité d'une position sans patinage de l'unité tractée,
**caractérisé en ce que**
la poulie à courroie (46) entraîne, par l'intermédiaire d'une seconde courroie (48), un générateur (40) qui est fixé au châssis de véhicule (10) et qui est prévu pour fournir de l'énergie électrique pour l'alimentation.

2. Dispositif selon la revendication 1, dans lequel le générateur est connecté à un système de batterie.

3. Dispositif selon la revendication 1, dans lequel le générateur est directement connecté à un consommateur électrique.

4. Dispositif selon l'une des revendications 1 à 3, dans lequel, dans le cas d'une semi-remorque citerne, l'alimentation se fait par des pompes ou des agitateurs.

5. Dispositif selon l'une des revendications 1 à 4, dans lequel, dans le cas d'une bétonnière, un entraînement électrique ou hydraulique d'un tambour de mélange rotatif et inclinable est effectué par l'intermédiaire d'un moteur électrique.

6. Agencement de véhicule frigorifique, en particulier unité tractée pourvue d'un compartiment frigorifique, telle qu'une remorque ou une semi-remorque, comportant le dispositif permettant de faire fonctionner un générateur selon la revendication 1, dans lequel le générateur (40) est prévu pour fournir de l'énergie électrique pour alimenter un groupe frigorifique (6).

7. Agencement de véhicule frigorifique selon la revendication 6, dans lequel le générateur (40) fait fonctionner directement le groupe frigorifique (6).

8. Agencement de véhicule frigorifique selon la revendication 6, dans lequel le générateur (40) est connecté à une batterie (8) par l'intermédiaire de laquelle le groupe frigorifique (6) est alimenté en énergie électrique.

9. Agencement de véhicule frigorifique selon l'une des revendications 6 à 8, dans lequel le générateur (40) est commandé de sorte que la fourniture d'énergie électrique est effectuée lors d'un fonctionnement en poussée de l'agencement de véhicule frigorifique (2).

10. Agencement de véhicule frigorifique selon l'une des revendications 6 à 8, dans lequel le générateur (40) peut être déplacé par rapport à la poulie à courroie (46) pour adapter la longueur de la seconde courroie (48).

11. Agencement de véhicule frigorifique selon l'une des revendications 6 à 10, dans lequel la roue porteuse (20) peut être transférée depuis ou vers une position de repos sans contact avec la chaussée.

12. Agencement de véhicule frigorifique selon la revendication 11, dans lequel le transfert de la roue porteuse (20) depuis ou vers la position de repos est effectué au moyen d'un appareil de commande, de sorte que le générateur (40) fournit de l'énergie électrique en fonction d'un besoin en courant du groupe frigorifique (6) ou d'un besoin de charge de la batterie (8).

13. Agencement de véhicule frigorifique selon la revendication 11 ou 12, dans lequel un cylindre de travail (38) réalise une rotation du levier pivotant (28) autour de l'axe de pivotement (30) ou un dispositif de levage déplace le support (32) par rapport au châssis de véhicule (10).

14. Agencement de véhicule frigorifique selon l'une des revendications 6 à 13, dans lequel la poulie à courroie (46) présente des diamètres extérieurs différents sur les surfaces de roulement de la première courroie (44) et de la seconde courroie (48).

15. Agencement de véhicule frigorifique selon l'une des revendications 6 à 14, dans lequel la roue porteuse (20) présente un diamètre réduit par rapport à celui des roues de l'unité tractée.

16. Agencement de véhicule frigorifique selon l'une des revendications 6 à 15, lequel est monté sur le châssis de véhicule (10), en particulier par l'intermédiaire de traverses (22), dans le cadre d'un rééquipement.

17. Agencement de véhicule frigorifique selon l'une des revendications 6 à 16, dans lequel le levier pivotant (28) est pourvu d'un élément élastique sous la forme d'une bielle oscillante ou dans lequel un ressort de torsion est disposé dans la zone de l'axe de pivotement (30).
